# EUROPEAN PATENT SPECIFICATION

(11) **EP 0 437 219 B1**
(45) Date of publication and mention of the grant of the patent: **12.06.1996**
(21) Application number: 91100116.2
(22) Date of filing: 02.01.1991
(51) Int. Cl.: G11B 27/10, G11B 27/28, G11B 27/032

(54) **Helical scan digital data reproduce apparatus**
Schrägspurwiedergabegerät für digitale Daten
Appareil de reproduction avec balayage hélicoidal pour données numériques

(30) Priority: 06.01.1990 JP 778/90
(43) Date of publication of application: 17.07.1991
(73) Proprietor: VICTOR COMPANY OF JAPAN, LIMITED, Kanagawa-ku Yokohama (JP)
(72) Inventor: Nakano, Hidemi, Shinagawa-ku, Tokyo (JP); Higurashi, Seiji, Fuchu-shi, Tokyo (JP)
(74) Representative: Finsterwald, Manfred, Dipl.-Ing., Dipl.-Wirtsch.-Ing.

(56) References cited:
- EP-A- 0 272 130
- EP-A- 0 323 910
- EP-A- 0 327 188
- WO-A-84/02221
- DE-A- 3 016 059
- US-A- 3 851 116
- PATENT ABSTRACTS OF JAPAN vol. 12, no. 331 (P-755)(3178) 07 September 1988, & JP-A- 63 094494
- PATENT ABSTRACTS OF JAPAN vol. 12, no. 468 (P-797)(3315) 08 December 1988, & JP-A- 63 187490
- JP-A-01 320657,26-12-1989&PATENTS ABSTRACTS OF JAPAN, Vol.14,No.128 (P-1019) (4071) March 9, 1990
- PATENT ABSTRACTS OF JAPAN vol. 13, no. 54 (P-824)(3402) 08 February 1989, & JP-A- 63 244436
- PATENT ABSTRACTS OF JAPAN vol. 13, no. 329 (P-904)(3677) 25 July 1989, & JP-A-01 092945

## Description

The present invention relates to a helical scan digital data reproduction apparatus for reproducing data from a magnetic tape.

A digital audio tape recorder (DAT) as a helical scan digital reproduction apparatus is known which can record a digital audio signal on a magnetic tape. In such a digital audio tape recorder, searching a desired program is carried out by using an index signal, a program number or a START-ID recorded at a top of a program.

Such a prior art digital audio tape recorder using only index signals can search a desired data in accordance with index signals such as to search the desired program in accordance with a manually inputted program number from the present tape position. This is a relative search. However, such a recorder cannot perform absolute searching.

On the other hand, an absolute search is possible when the ID-code is used. However, in the PCM audio VTR it is difficult to read out the ID-code accepting reproducing mode. Therefore, the ID-code cannot be used in the search mode wherein the recording medium is transferred at a high speed.

Moreover, if a program number to be searched is inputted, it is impossible to search the program in the case that the program number of the present position of the tape has not been detected such as just after inserting a cassette.

From WO-A-84/02221 it is known that in a data carrier a format of parallel tracks is used each starting with unique track identity number and a unique relationship to control tracks which provide for high speed mode search and a low speed mode location.

Acording to this document, if a first track identification code signal is to be recorded along a control track 31 and this contains a group identification code for a group of data tracks and in a typical case each group contains 100 tracks. This document thus suggests that a group of tracks should be provided by coded signal sequences on one controL track and individual tracks identified by coded signal sequences in a further longitudinal track. It is further suggested to employ a separate track for the individual data storage track identification codes in addition to the group identification track.

Thus, document WO-A-84/02221 suggests to use a plurality of tracks in order to allow high speed searching.

From DE-OS 30 16 059, against which the preamble of claim 1 is delimited, a tape location searching device for a PCM recording- and reproducing apparatus is known.

According to this document, it is presumed that an address to be searched on a tape is inputted by a user. The current address of the stopped tape is read from the video track by bringing the video head for a short time in a reproduction position at the stopped tape. The number of distances of the control signals corresponding to the number of addresses between the two addresses, which can be winded forward or rewinded at a fast speed, and the direction of said fast winding are determined by computional operations. The winding operation of the tape is effected thereafter, the video head being deenergized and a control head being energized while the number of distances of control signals being read sequentially from the control track by the control head correspond to the number of the addresses winded, the magnetic tape being stopped or brought into a reproducing position on sensing this correspondence in order to stop the search for the desired track position.

It is an object of the present invention to develop an improved helical scan digital data reproduce apparatus and to perform the absolute searching according to the program number other than in the reproduction mode.

This object is achieved by an apparatus comprising the features of independent claim 1.

Preferred embodiments are described in the dependent claims.

### BRIEF DESCRIPTION OF THE DRAWINGS

The object and features of the present invention will become more readily apparent from the following detailed description taken in conjunction with the accompanying drawings in which:
Fig. 1 is a block diagram of an embodiment of data reproducing apparatus of the invention in the reproduce and search modes;
Fig. 2 is a block diagram of a modified embodiment of data reproducing apparatus with the record function;
Fig. 3 schematically illustrates a track pattern on the magnetic tape;
Fig. 4 schematically illustrates one sub-frame of a track pattern;
Fig. 5 shows a format for recording ID codes;
Fig. 6 shows a detailed format for recording ID codes;
Fig. 7 schematically illustrates relation between programs recorded on the magnetic tape, program numbers, index numbers, program start flags, and index signals;
Fig. 8 is a flow chart of the embodiment;
Figs. 9 and 10 schematically illustrate operation of end of searching.

The same or corresponding elements or parts are designated as like references throughout the drawings.

### DETAILED DESCRIPTION OF THE INVENTION

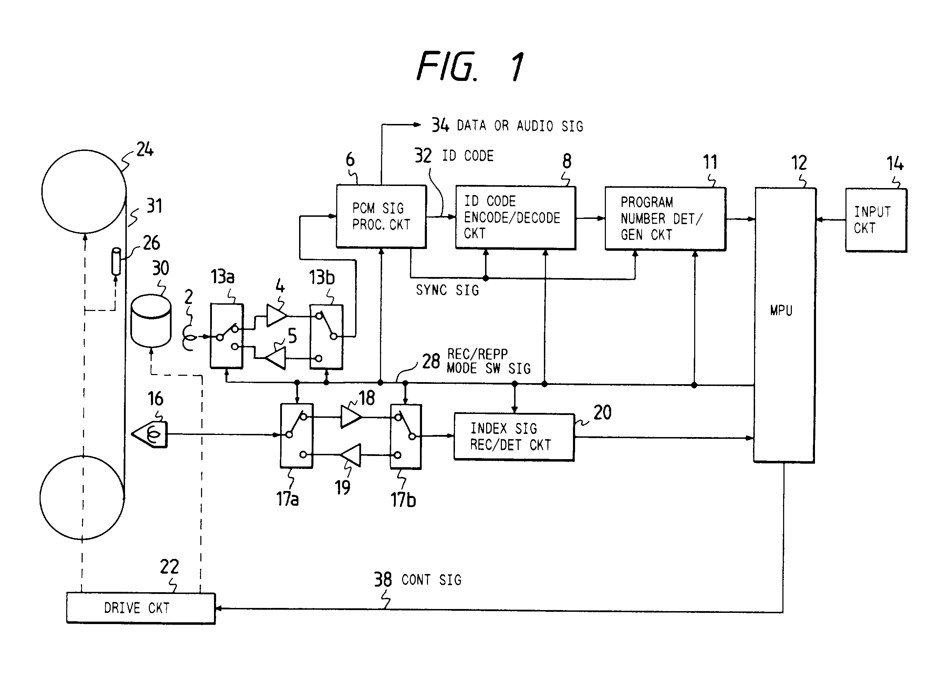

Hereinbelow will be described a first embodiment of this invention. Fig. 1 is a block diagram of an embodiment of a PCM audio VTR, as a helical scan digital data reproduce apparatus of the invention. In Fig. 1, a magnetic tape 31 is travelled by capstan 26 and wound by a take up reel 24. Digital data recorded along plural tracks made by helically scanning is reproduced by a pair of rotary heads 2 (only one is shown) which are actually mounted on the rotary cylinder 30. The reproduced signal by the head 2 is fed to an amplifier 4 through a switch 13a responsive to a record/reproduce signal 28. The amplified signal is applied to a PCM signal processing circuit 6 through switch 13b responsive to a record/reproduce mode switching signal 28. These switches and switches 17a and 17b are controlled by the record/ reproduce mode switching signal 28. The PCM signal processing circuit 6 detects a synchronizing signal and separates the amplified reproduced digital data into data or audio signal 34 and ID codes in response the synchronizing signal. The synchronizing signal is recorded on the magnetic tape 31 at a beginning of each block in every field or track by specified code. ID code is recorded at given regions of the track. Thus, the ID code can be separated with reference to the synchronizing signal. ID codes separated by the PCM signal processing circuit 6 is sent to an ID code encode/decode circuit 8 for encoding the ID code. The encoded ID codes are sent to a program number detection/generating circuit 11 for detecting a program number with reference to the synchronizing signal. The program number is recorded on the magnetic tape in the region of the ID code at a given space. Thus, the program number can be detected by referring the synchronizing signal. The detected program number as an ordinal number of a data train is supplied to a microprocessing unit (mpu) 12.

The magnetic tape 31 is also scanned by a fixed control head 16 for controlling tracking. An index signal of a program is recorded on the magnetic tape 31 by changing magnetizing pattern on the control track, for example duty ratio. The control signal reproduced by the control head 16 is sent to an index signal record/detecting circuit 20 through amplifier 18. The index signal record/detecting circuit 20 detects the index signal and sent it to the microprocessing unit 12. The record/reproduce mode switching signal 28 is produced by a microprocessing unit 12 in response to an input circuit 14 and changes the ID code encode/decode circuit, the program number detection/generation circuit 11, the index signal recording /detection circuit 20, and switches 17a and 17b between the reproduce and record modes. An input circuit 14 produces commands of reproduce, record, fast-winding, rewinding, and search modes and also produces a program number to be searched in response to manual operation. The microprocessing unit 12 sends a control signal 38 to a drive circuit 22 for driving the rotary cylinder 30, the capstan 26, the take-up reel 24 to perform the reproduce, record, fast-winding, rewinding, and search modes in accordance with a program stored therein. Hereinbelow will be described operation of this embodiment.

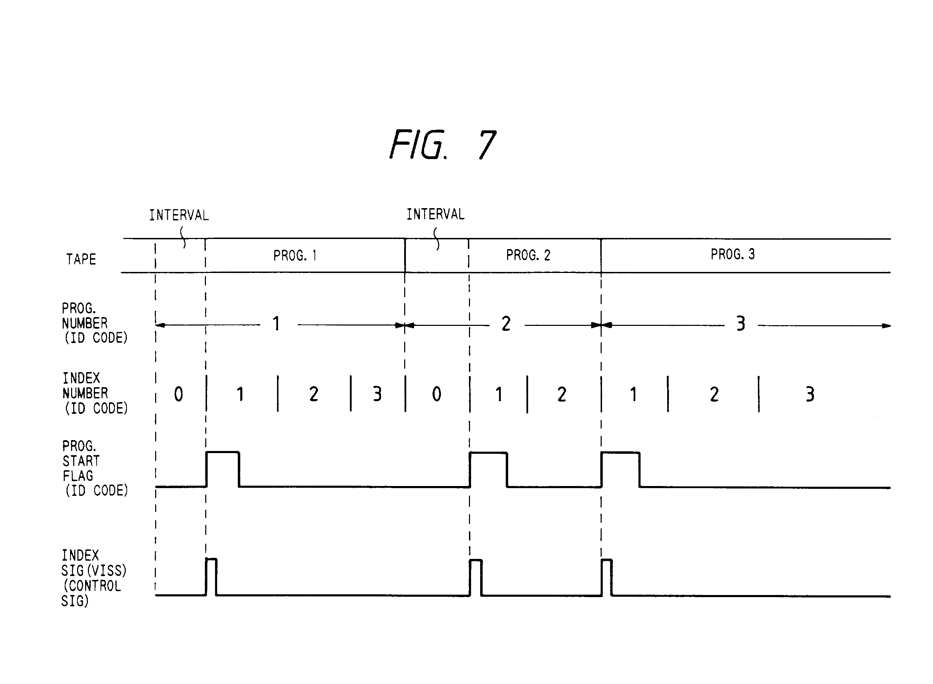

Fig. 7 shows a signal recorded on the magnetic tape schematically.

In this embodiment, three programs are recorded. Top portions of first two programs have respective interval portions where any audio signal is not substantially recorded. A top of the third program has no interval portion. The index number (ID code) is set to zero at the interval portion and then, is increased by one at given interval. The program start flag is set for a given interval just after a change of the index number to 1. The index signal is also produced for a given interval just after the change of the index number to 1.

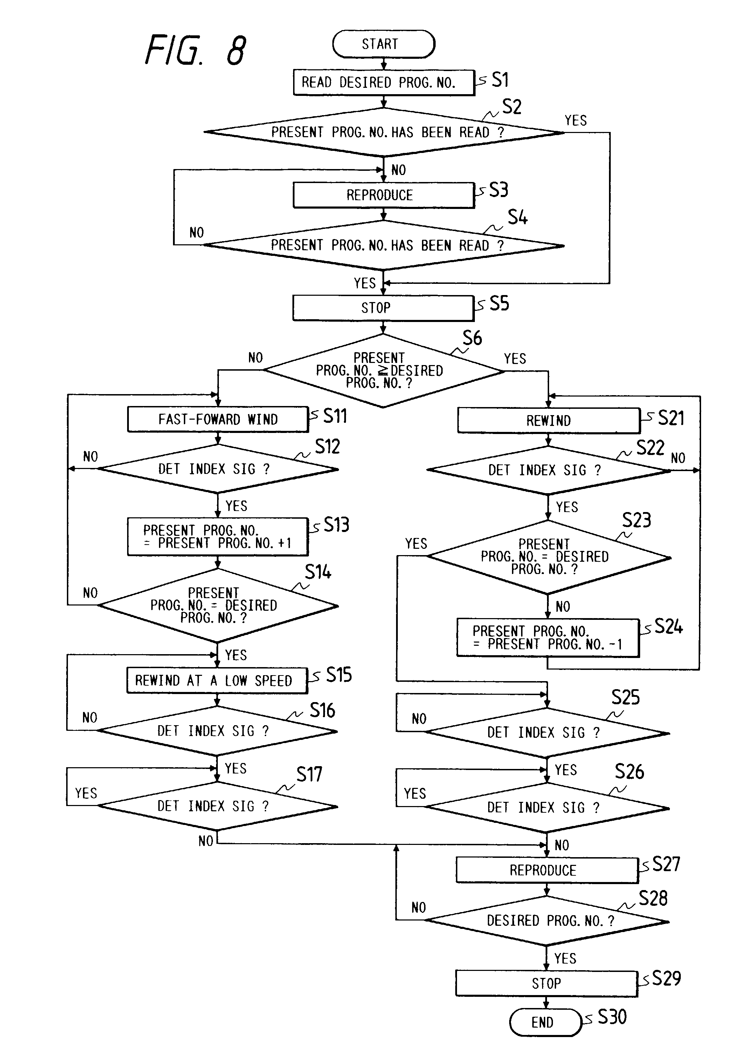

Operation of searching by the digital data record/reproduce apparatus according to the invention will be described further with reference to a flow chart shown in Fig. 8.

An initializing is made before start of the flow of Fig. 8. During initializing, a possible largest number is set to a variable of a program number. At first, a program number to be searched is inputted by a user (step S1), as shown in Fig. 8. The microprocessing unit 12 checks whether the program number at the present tape position has been detected by checking whether the variable of the program number is a reasonable number. If NO, once the microprocessing unit 12 sets the system to the reproducing mode. Then, the magnetic tape 31 is reproduced by traveling it at a reproducing speed (steps S2 and S3). As the result, when the program number is detected, the apparatus is set into a stop mode (steps S2, S4, and S5). If YES in step S2, processing proceeds to step S5 where the stop mode is set to.

In the following step S6, the microprocessing unit 12 makes a decision as to whether the program number at the present tape position is greater than that of a searched program, or a desired program. If the program number for searching is greater than that of the present tape position, the magnetic tape 31 is travelled in the fast-forward mode in step S11. During this, when the index signal is detected is step S12, the program number as the present tape position is increased by one in step S13 and then, it is compared with the program number for searching in step S14. If the program number of the present tape position is not equal to the program number for searching, the fast-forward mode is continued.

When both program numbers are equal to each other, rewinding at a low speed is executed in step S15 to return the magnetic tape 31 to a point just before an index signal (end point of a program just before the desired program to be searched) for correction of the overrun (steps S15 to S 17).

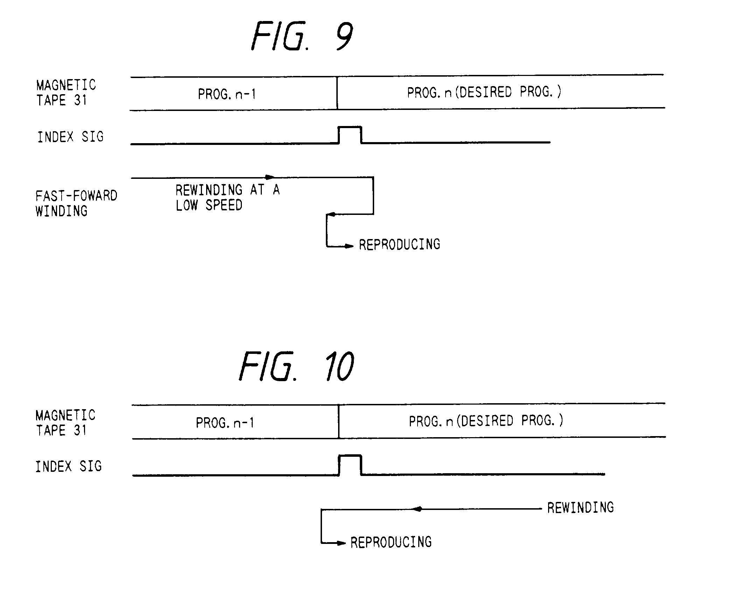

Fig. 9 illustrates the above-mentioned operation with respect to the magnetic tape 31.

On the other hand, if the program number for searching is smaller than or equal to that of the present tape position in step S6, the magnetic tape 31 is rewound in step S21.

When the index signal is detected during rewinding of the magnetic tape 31, the program number of the present position is compared with that for searching in steps S22 and S23. If the program number of the present tape position is not equal to the program number for searching, the program number of the present position is decreased by one in step S24 and the rewinding is continued.

When both program numbers are equal to each other in step 23, the magnetic tape 31 is rewound to an end of an index signal (an end point of a program just before the desired program to be searched) in steps S25 to S26.

Fig. 10 illustrates the above-mentioned operation with respect to the magnetic tape 31.

In both cases of fast-forward winding and rewinding, if an end point of an index signal is detected in steps S17 and S26, the apparatus is set into the reproducing mode and the program number is read out in step S28. Then, at the instance that the program number reaches that for searching, the stop mode is executed in steps S29 and S30.

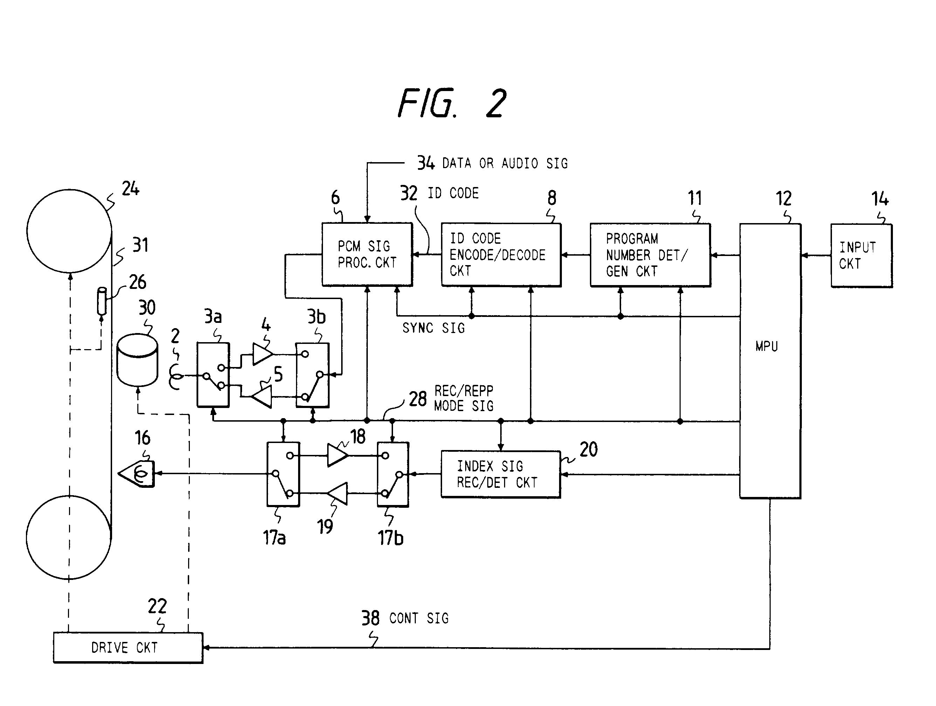

Fig. 2 is a block diagram of a modified embodiment of the digital reproduce apparatus with recording function and shows recording the ID code and the index signal. The record/reproduce mode switching signal changes the system to the record mode. In Fig. 2, the rotary heads 2 record PCM digital data which is made by mixing data or the audio signal 34 with the ID code from the ID code encode/decode circuit 8 including the program number. The program number is generated by program number detection/generation circuit 11 in response to an output of the microprocessing unit 12. The microprocessing unit 12 produces an index signal which is recorded by the fixed control head 16 through the index signal record/detection circuit 20. The digital data reproduce apparatus with recording function can record a program after search operation shown in the flow of Fig. 8 to record a new program over a desired recorded program.

The index signal record/detection circuit writes an index signal onto a magnetic tape 31 in response to an index signal write request command from the microprocessing unit 12. The index signal, which has been used in the conventional VTR, is recorded by recording a control signal whose duty ratio is changed at a top portion of a program on the magnetic tape 31 by the control head in a control track.

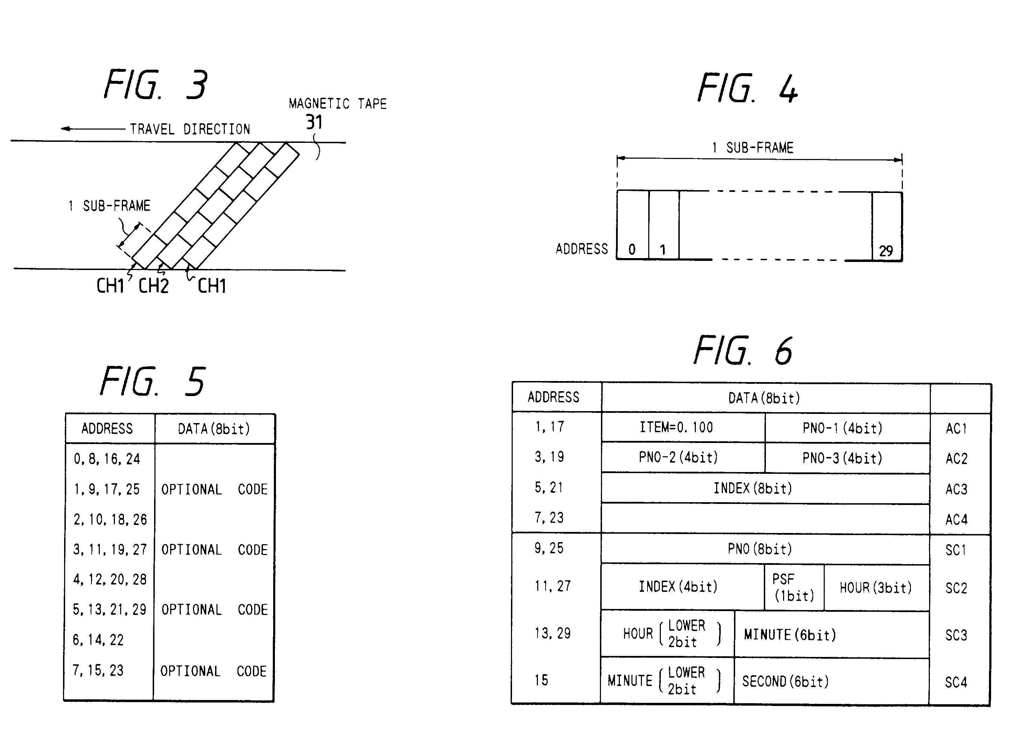

Fig. 3 schematically illustrates a track pattern on the magnetic tape of the modified embodiment of the digital data reproduce apparatus of the invent-ion.

In the PCM audio VTR, PCM audio data and ID code are recorded on tracks of the magnetic tape 31 as shown in Fig. 3. Each track (field) is divided into five sub-frames (six sub-frames in the case of CCIR system).

Each sub-frame is further divided into thirty blocks of address zero to twenty-nine, as shown in Fig. 4. Each block has a synchronizing signal region (8 bits), an address signal region (8 bits), an ID code region (8 bits), a parity check signal region (8bits) for error check of the address signal and the ID code, and a PCM audio data region (31 x 8 bits) in mentioned order.

Fig. 5 shows a format for recording ID codes on respective blocks.

Data in ID code regions of addresses "1, 9 , 17, 25", "3, 11, 19, 27", "5, 13 ,21, 29", and "7, 15, 23" out of address zero to 29 are used as optional codes (eight bits each), as shown in Fig. 5.

An item (ITEM) of four bits and hundreds digit (PNO-1) of a program number can be recorded in the ID code regions of address 1 and address 17, as shown in Fig. 6. Similarly, in the addresses 3 and 19, tens digit 2 (PNO-2) and units digit (PNO-3) of the program number are recorded. In address 5 and address 21, an index number (eight bits) can be recorded.

The ITEM (four bits) indicates that AC1 to AC4 show a program number and an index number when the ITEM is "0100". Respective digits PNO-1, PNO-2 and PNO-3 of a program number are expressed in binary coded decimal (BCD) system.

Data in the ID code regions of these addresses 1, 3, 5, and 7 (17, 19, 21, and 23) make up data AC1 to AC4. Each of data AC1 to AC4 is recorded at least once a field (track).

Moreover, the program number expressed in 8-bit binary notation is recorded in address 9 and address 25. In address 11 and address 27, an index number (four bits) and a program start flag PSF (one bit) are recorded in the former five bits. Absolute time showing absolute time from a start of recording on the magnetic tape is recorded in binary notation on the latter three bits of addresses 11 and 27 and in addresses 13, 29, and 15. The program number shows the ordinal number of programs and is a binary number. The index number expressed in 4-bit binary notation shows the index number in each program a binary number. The program start flag PSF (one bit) is provided to recognize start of each program by recording "1" for three hundred of frames at start of the program.

A blank shown in Fig. 6 indicates an unused region.

As mentioned above, this invention is described along an embodiment. According to the concept of the invention, various modifications can be considered. For example, it is possible to set the apparatus into a mode other than the reproducing mode, i.e., still, power-off, timer standby, eject modes, which are indicated by a next function memory included in the microprocessing unit 12.

In accordance with the embodiment mentioned above, there is provided effects as follows:
This invention can be provided by the PCM circuit 32 and a program for the micro-computer in the mechanical control CPU circuit 34 at a low cost.

Moreover, this invention improves the apparatus in operation because searching is possible only detection of an absolute address.

## Claims

1. A helical scan digital data reproduction apparatus for reproducing data from a magnetic tape on which each of helically scanned tracks includes a plurality of information blocks, each information block including a synchronizing signal, address information representing an ordinal number and data for reproduction, said magnetic tape also having an index signal recorded on a longitudinal control track at address increments, said apparatus comprising:
(a) input means (14) for inputting a desired address number to be searched;
(b) helical scanning head means (2) for reading out said synchronizing signal, said data, and said address information from said helically scanned magnetic tape in a normal speed made;
(c) synchronizing signal detection means (6) responsive to an output of said helical scanning head means for detecting said synchronizing signal;
(d) separation means (6) responsive to said output of said helical scanning head means for separating said data and said address information in accordance with a given timing determined by said synchronizing signal;
(e) detecting means (11) responsive to said address information for detecting and outputting said address number included therein;
(f) control head means (16) for reading the control signal on said longitudinal control track;
(g) index signal detection means (20) for detecting said index signal from said control signal; and
(h) control means (12) responsive to said desired address number and said address information detected at the start of the search for searching said address corresponding to said desired address number in accordance with a difference between said desired address number and an address information detected at the start of the search, said difference being changed in response to the detection of index signals detected in a high speed searching mode;
characterized in that
said input means (14) is adapted for inputting a desired program number as said desired address information, said address information representing an ordinal number being an identification code including a program number, which can be read by the helical scanning means (2), separated by the separation means (6) and detected and outputted by the detecting means (11) as said address number,
said index signal detection means (20) is responsive to said control signal to detect said index signal at a start of a program, said address increments being recorded at a start of a program,
said control means (12) is responsive to the difference between the program number detected at the start of the searching mode as said address information and said desired program number for searching said start of a program, said difference being changed in response to the detection of said index signal in a searching mode.

2. An apparatus as claimed in claim 1, wherein said control means determines a direction of said searching by means for comparing (S6) said separated program number with said desired program number.

3. An apparatus as claimed in claim 2, wherein said control means determines either a fast forward-winding or rewinding of said magnetic tape for searching the program.

4. An apparatus as claimed in claim 3, wherein said control means (12) performs said fast forward-winding when said separated program number is smaller than said desired program number.

5. An apparatus as claimed in claim 4, wherein said control means (12) comprises means (S14) for maintaining said fast forward-winding until said difference becomes zero.

6. An apparatus as claimed in claim 3, wherein said control means (12) performs said rewinding in response to the detection that said difference becomes zero to return said magnetic tape to position said scanning head means just before the last detected index signal.

7. An apparatus as claimed in claim 3, wherein said control means (12) performs said rewinding when said separated program number is larger than said desired program number.

8. An apparatus as claimed in claim 7, wherein said control means maintains said rewinding until said difference becomes zero.

9. An apparatus as claimed in claim 8, wherein said control means (12) performs said forward-winding in response to the detection that said difference becomes zero to adjust a position of said magnetic tape to position said scanning head means just before said last detected index signal.

10. An apparatus as claimed in claim 1, wherein said control means (12) causes said helical scanning head means (2), synchronizing signal detection means (6), separation means (6), control head means (16) to reproduce said data in response to termination of said searching.

11. An apparatus as claimed in claim 1, further comprising recording means for recording input data, said control means causing said recording means to record said input data through said helical scanning head means (2) in response to termination of said searching.

## Patentansprüche

1. Eine Schraubenlinienabtastdigitaldatenwiedergabevorrichtung zum Wiedergeben von Daten von einem Magnetband, auf welchem jede von schraubenförmig abgetasteten Spuren eine Vielzahl von Informationsblöcken umfaßt, jeder Informationsblock ein Synchronisierungssignal, Adreßinformation, die eine Ordnungszahl repräsentiert, und Daten zur Wiedergabe umfaßt, wobei das Magnetband auch ein Indexsignal aufweist, das auf einer longitudinalen Steuerspur bei Adreßinkrementen aufgenommen ist, wobei die Vorrichtung umfaßt:
(a) ein Eingabemittel (14) zum Eingeben einer gewünschten Adreßnummer, die gesucht werden soll;
(b) ein Schraubenlinienabtastkopfmittel (2) zum Auslesen des Synchronisierungssignals, der Daten und der Adreßinformation von dem schraubenlinienförmig abgetasteten Magnetband in einem Normalgeschwindigkeitsmodus;
(c) ein Synchronisierungssignaldetektionsmittel (6), das auf eine Ausgabe des Schraubenlinienabtastkopfmittels zum Detektieren des synchronisierenden Signals anspricht;
(d) ein Separationsmittel (6), das auf den Ausgang des Schraubenlinienabtastkopfmittels zum Separieren der Daten und der Adreßinformation in Übereinstimmung mit einer gegebenen Zeitbestimmung anspricht, die durch das Synchronisierungssignal bestimmt ist;
(e) ein detektierendes Mittel (11), das auf die Adreßinformation zum Detektieren und Ausgeben der Adreßnummer, die darin umfaßt ist, anspricht;
(f) ein Steuerkopfmittel (16) zum Lesen des Steuersignals auf der longitudinalen Steuerspur;
(g) ein Indexsignaldetektionsmittel (20) zum Detektieren des Indexsignals aus dem Steuersignal; und
(h) ein Steuermittel (12), das auf die gewünschte Adreßnummer und die Adreßinformation, die beim Beginn der Suche zum Suchen der Adresse entsprechend der gewünschten Adreßnummer in Übereinstimmung mit einer Differenz zwischen der gewünschten Adreßnummer und einer Adreßinformation, die zu Beginn der Suche detektiert wird, anspricht, wobei die Differenz im Ansprechen auf die Detektion von Indexsignalen geändert wird, die in einem Hochgeschwindigkeitssuchmodus detektiert werden;
dadurch gekennzeichnet, daß
das Eingabemittel (14) zum Eingeben einer gewünschten Programmnummer als der gewünschten Adreßinformation angepaßt ist, wobei die Adreßinformation eine Ordnungszahl repräsentiert, die einen Identifikationscode mit einer Programmnummer darstellt, welcher durch das Schraubenlinienabtastmittel (2) gelesen, von dem Separationsmittel (6) separiert und durch das detektierende Mittel (11) detektiert und als die Adreßnummer ausgegeben werden kann,
das Indexsignaldetektionsmittel (20) auf das Steuersignal anspricht, um das Indexsignal bei einem Beginn eines Programms zu detektieren, wobei die Adreßinkremente bei einem Beginn eines Programms aufgenommen sind,
das Steuermittel (12) auf die Differenz zwischen der Programmnummer, die beim Start des Suchmodus als die Adreßinformation detektiert ist, und die gewünschte Programmnummer zum Suchen des Startes eines Programms anspricht, wobei die Differenz im Ansprechen auf die Detektion des Indexsignals in einem Suchmodus geändert wird.

2. Eine Vorrichtung nach Anspruch 1, worin das Steuermittel eine Richtung des Suchens durch das Mittel zum Vergleichen (S6) der separierten Programmnummer mit der gewünschten Programmnummer bestimmt.

3. Eine Vorrichtung nach Anspruch 2, worin das Steuermittel entweder ein schnelles Vorwärtsspulen oder Rückspulen des Magnetbandes zum Suchen des Programmes bestimmt.

4. Eine Vorrichtung nach Anspruch 3, worin das Steuermittel (12) das schnelle Vorwärtsspulen ausführt, wenn die separierte Programmnummer kleiner als die gewünschte Programmnummer ist.

5. Eine Vorrichtung nach Anspruch 4, worin das Steuermittel (12) ein Mittel (S14) zum Aufrechterhalten des schnellen Vorwärtsspulens umfaßt, bis die Differenz Null wird.

6. Eine Vorrichtung nach Anspruch 3, worin das Steuermittel (12) das Rückspulen im Ansprechen auf die Detektion ausführt, daß die Differenz Null wird, um das Magnetband zurückzuführen, um das Abtastkopfmittel gerade vor dem letzten detektierten Indexsignal zu positionieren.

7. Eine Vorrichtung nach Anspruch 3, worin das Steuermittel (12) das Rückspulen ausführt, wenn die separierte Programmnummer größer als die gewünschte Programmnummer ist.

8. Eine Vorrichtung nach Anspruch 7, worin das Steuermittel das Rückspulen aufrechterhält, bis die Differenz Null wird.

9. Eine Vorrichtung nach Anspruch 8, worin das Steuermittel (12) das Vorwärtsspulen im Ansprechen auf die Detektion durchführt, daß die Differenz Null wird, um eine Position des Magnetbandes einzustellen, um das Abtastkopfmittel gerade vor dem letzten detektierten Indexsignal zu positionieren.

10. Eine Vorrichtung nach Anspruch 1, worin das Steuermittel (12) das Schraubenlinienabtastkopfmittel (2), das Synchronisierungssignaldetektionsmittel (6), das Separationsmittel (6), das Steuerkopfmittel (16) dazu veranlaßt, die Daten im Ansprechen auf den Abschluß des Suchens wiederzugeben.

11. Eine Vorrichtung nach Anspruch 1, weiter mit einem Aufnahmemittel zum Aufnehmen von Eingabedaten, wobei das Steuermittel das Aufnahmemittel dazu veranlaßt, die Eingangsdaten durch das Schraubenlinienabtastkopfmittel (2) im Ansprechen auf den Abschluß des Suchens aufzunehmen.

## Revendications

1. Appareil de reproduction de données numériques à balayage hélicoïdal pour la reproduction de données à partir d'une bande magnétique sur laquelle chacune des pistes balayées hélicoïdalement comprend une pluralité de blocs d'informations, chaque bloc d'informations comprenant un signal de synchronisation, des informations d'adresse représentant un nombre ordinal et des données pour une reproduction, ladite bande magnétique comprenant aussi un signal d'index enregistré, à des incréments d'adresse, sur une piste longitudinale de commande, ledit appareil comprenant:
(a) un moyen d'entrée (14) pour entrer un numéro d'adresse désiré à rechercher;
(b) un moyen (2) formant tête de balayage hélicoïdal pour lire ledit signal de synchronisation, lesdites données, et lesdites informations d'adresse sur ladite bande magnétique balayée hélicoïdalement en mode de vitesse normale;
(c) un moyen (6) de détection de signal de synchronisation réagissant au signal de sortie du moyen formant tête de balayage hélicoïdal en détectant ledit signal de synchronisation;
(d) un moyen de séparation (6) réagissant audit signal de sortie dudit moyen formant tête de balayage hélicoïdal en séparant lesdites données et lesdites informations d'adresse à une cadence donnée déterminée par ledit signal de synchronisation;
(e) un moyen de détection (11) réagissant auxdites informations d'adresse en détectant et en émettant ledit numéro d'adresse inclus dans ces informations;
(f) un moyen (16) formant tête de commande pour lire le signal de commande sur ladite piste longitudinale de commande;
(g) un moyen (20) de détection de signal d'index pour détecter ledit signal d'index à partir dudit signal de commande; et
(h) un moyen de commande (12) réagissant audit numéro d'adresse désiré et auxdites informations détectées au début de la recherche en recherchant ladite adresse correspondant au numéro d'adresse désiré en fonction de la différence entre ledit numéro d'adresse désiré et une information d'adresse détectée au début de la recherche, ladite différence étant modifiée en réponse à la détection des signaux d'index détectés en mode de recherche à grande vitesse,
caractérisé en ce que:
ledit moyen d'entrée (14) est adapté pour entrer un numéro de programme désiré en tant qu'informations d'adresse désirées précitées, lesdites informations d'adresse représentant un nombre ordinal qui est un code d'identification comprenant un numéro de programme pouvant être lu par le moyen (2) de balayage hélicoïdal, séparé par le moyen de séparation (6) et détecté ainsi qu'émis par le moyen de détection (11) en tant que numéro d'adresse précité,
ledit moyen (20) de détection de signal d'index réagit audit signal de commande en détectant ledit signal d'index au début d'un programme, lesdits incréments d'adresse étant enregistrés au début d'un programme,
ledit moyen de commande (12) réagit à la différence entre le numéro de programme détecté au début du mode de recherche en tant qu'information d'adresse précitée et ledit numéro de programme désiré pour rechercher ledit début d'un programme, ladite différence étant modifiée en réponse à la détection dudit signal d'index en mode recherche.

2. Appareil selon la revendication 1, dans lequel ledit moyen de commande détermine la direction de ladite recherche à l'aide d'un moyen pour comparer (S6) ledit numéro de programme séparé avec ledit numéro de programme désiré.

3. Appareil selon la revendication 2, dans lequel ledit moyen de commande détermine soit un déroulement rapide, soit un réenroulement rapide de ladite bande magnétique pour rechercher le programme.

4. Appareil selon la revendication 3, dans lequel ledit moyen de commande (12) effectue ledit déroulement rapide quand ledit numéro de programme séparé est inférieur au numéro de programme désiré.

5. Appareil selon la revendication 4, dans lequel ledit moyen de commande (12) comprend un moyen (S14) pour maintenir ledit déroulement rapide jusqu'à ce que ladite différence prenne une valeur nulle.

6. Appareil selon la revendication 3, dans lequel ledit moyen de commande (12) effectue ledit réenroulement en réponse à la détection d'une valeur nulle de ladite différence pour faire revenir ladite bande magnétique jusqu'à la position que le moyen formant tête de balayage occupait juste avant la détection du dernier signal d'index.

7. Appareil selon la revendication 3, dans lequel ledit moyen de commande (12) effectue ledit réenroulement quand ledit numéro de programme séparé est supérieur audit numéro de programme désiré.

8. Appareil selon la revendication 7, dans lequel ledit moyen de commande maintient ledit réenroulement jusqu'à ce que ladite différence devienne nulle.

9. Appareil selon la revendication 8, dans lequel ledit moyen de commande (12) effectue ledit déroulement en réponse à la détection d'une valeur nulle de ladite différence pour ajuster la position de ladite bande magnétique de manière que ledit moyen formant tête de balayage se trouve dans la position qu'il occupait juste avant la détection dudit dernier signal d'index.

10. Appareil selon la revendication 1, dans lequel ledit moyen de commande (12) amène ledit moyen (2) formant tête de balayage hélicoïdal, ledit moyen (6) de détection de signal de synchronisation, ledit moyen de séparation (6), ledit moyen (16) formant tête de commande à reproduire lesdites données en réponse à la cessation de ladite recherche.

11. Appareil selon la revendication 1, comprenant, en outre, un moyen d'enregistrement pour enregistrer des données d'entrée, ledit moyen de commande amenant ledit moyen d'enregistrement à enregistrer lesdites données d'entrée par l'intermédiaire du moyen (2) formant tête de balayage hélicoïdal en réponse à la cessation de ladite recherche.
